# EUROPÄISCHE PATENTSCHRIFT

(11) **EP 1 036 036 B1**
(45) Veröffentlichungstag und Bekanntmachung des Hinweises auf die Patenterteilung: **19.09.2001**
(21) Anmeldenummer: 98959888.3
(22) Anmeldetag: 26.11.1998
(51) Int. Cl.: C02F 1/44

(54) **ABWASSERAUFBEREITUNG BEI DER PHOSPHATIERUNG**
TREATMENT OF PHOSPHATING WASTE WATER
TRAITEMENT D'EAUX USEES LORS DE LA PHOSPHATATION

(30) Priorität: 05.12.1997 DE 19754109
(43) Veröffentlichungstag der Anmeldung: 20.09.2000
(73) Patentinhaber: Henkel Kommanditgesellschaft auf Aktien, 40589 Düsseldorf-Holthausen (DE)
(72) Erfinder: BROUWER, Jan-Willem, D-47877 Willich (DE); KUHM, Peter, D-47024 Hilden (DE); VIER, Jens, D-40789 Monheim (DE)
(86) Internationale Anmeldenummer: EP9807642
(87) Internationale Veröffentlichungsnummer: WO9929629

(56) Entgegenhaltungen:
- WO-A-97/30190
- US-A- 3 491 021

## Beschreibung

Die Erfindung liegt auf dem Gebiet der Phosphatierung von Metalloberflächen, wie sie als verbreitete Korrosionsschutzmaßnahme in der metallverarbeitenden Industrie wie beispielsweise der Automobilindustrie und der Haushaltsgeräteindustrie, jedoch teilweise auch in Stahlwerken durchgeführt wird. Sie betrifft ein Verfahren zur Aufbereitung des Überlaufs der Phosphatierbäder oder des Spülwassers nach der Phosphatierung. Das Verfahren vereinfacht die Abwasserbehandlung und ermöglicht in einer bevorzugten Ausführungsform die Rückführung von Badinhaltsstoffen in das Phosphatierbad.

Die Phosphatierung von Metallen verfolgt das Ziel, auf der Metalloberfläche festverwachsene Metallphosphatschichten zu erzeugen, die für sich bereits Korrosionsbeständigkeit verbessern und in Verbindung mit Lacken und anderen organischen Beschichtungen zu einer wesentlichen Erhöhung der Haftung und der Resistenz gegen Unterwanderung bei Korrosionsbeanspruchung beitragen. Solche Phosphatierverfahren sind seit langem im Stand der Technik bekannt. Für die Vorbehandlung vor der Lackierung eigenen sich insbesondere die Niedrig-Zink-Phosphatierverfahren, bei denen die Phosphatierlösungen vergleichsweise geringe Gehalte an Zinkionen von z. B. 0,5 bis 2 g/l aufweisen. Ein wesentlicher Parameter in diesen Niedrig-Zink-Phosphatierbädem ist das Gewichtsverhältnis Phosphationen zu Zinkionen, das üblicherweise im Bereich > 12 liegt und Werte bis zu 30 annehmen kann.

Es hat sich gezeigt, daß durch die Mitverwendung anderer mehrwertiger Kationen als Zink in den Phosphatierbädern Phosphatschichten mit deutlich verbesserten Korrosionsschutz- und Lackhaftungseigenschaften ausgebildet werden können. Beispielsweise finden Niedrig-Zink-Verfahren mit Zusatz von z. B. 0,5 bis 1,5 g/l Manganionen und z. B. 0,3 bis 2,0 g/l Nickelionen als sogenannte Trikation-Verfahren zur Vorbereitung von Metalloberflächen für die Lackierung, beispielsweise für die kathodische Elektrotauchlackierung von Autokarosserien, weite Anwendung.

Eine Phosphatierlösung enthält schichtbildende Komponenten wie z.B. Zink- und ggf. weitere zweiwertige Metallionen sowie Phosphationen. Außerdem enthält eine Phosphatierlösung nichtschichtbildende Komponenten wie insbesondere Beschleuniger und deren Abbauprodukte. Die Abbauprodukte des Beschleunigers entstehen dadurch, daß dieser mit dem durch Beizreaktion an der Metalloberfläche gebildeten Wasserstoff reagiert. Die sich mit der Zeit im Phosphatierbad anreichernden nichtschichtbildenden Komponenten wie beispielsweise Alkalimetallionen und insbesondere die Abbauprodukte des Beschleunigers können aus der Phosphatierlösung nur dadurch entfernt werden, daß man ein Teil der Phosphatierlösung austrägt und verwirft und kontinuierlich oder diskontinuierlich durch neue Phosphatierlösung ersetzt. Phosphatierlösung kann beispielsweise dadurch ausgetragen werden, daß man das Phosphatierbad mit einem Überlauf betreibt und den Überlauf verwirft. In der Regel ist ein Überlauf jedoch nicht erforderlich, da durch die phosphatierten Metallteile eine ausreichende Menge Phosphatierlösung als anhaftender Flüssigkeitsfilm ausgetragen wird.

Nach der Phosphatierung wird die an den phosphatierten Teilen wie beipsielsweise Automobilkarossen anhaftende Phosphatierlösung mit Wasser abgespült. Da die Phosphatierlösung Schwermetalle und ggf. weitere Inhaltsstoffe enthält, die nicht unkontrolliert in die Umwelt abgegeben werden dürfen, muß das Spülwasser einer Wasserbehandlung unterzogen werden. Dies muß in einem getrennten Schritt vor der Einleitung in eine biologische Kläranlage erfolgen, da sonst die Funktionsfähigkeit der Kläranlage gefährdet würde.

Da sowohl die Entsorgung des Abwassers (aus Phosphatierbadüberlauf und/oder Spülwasser) als auch die Versorgung der Phosphatieranlage mit Frischwasser Kostenfaktoren sind, besteht ein Bedarf, diese Kosten zu minimieren. Die DE-C-44 20 760 beschreibt ein Verfahren und eine Anlage zur Wiederaufbereitung oder Aufkonzentration verbrauchter tensidhaltiger Eisenphosphatierbäder. Hierbei handelt es sich also nicht um eine Zinkphosphatierung wie vorstehend beschrieben, die auf den behandelten Metalloberflächen kristalline zinkhaltige Phosphatschichten erzeugt. Vielmehr beschreibt dieses Verfahren eine Eisenphosphatierung, bei der auf Eisenoberflächen amorphe Schichten von Eisenphosphat und Eisenoxiden entstehen. Setzt man der Eisenphosphatierlösung Tenside zu, so wirkt diese gleichzeitig als Reiniger. In dem genannten Dokument geht es um die Wiederaufbereitung einer solchen tensidhaltigen Eisenphosphatierlösung durch eine Ultrafiltration. Diese wird derart durchgeführt, daß die Tenside überwiegend als Retentat zurückgehalten werden. Das Permeat enthält die Metallionen und muß entsorgt werden. Die im Retentat zurückgehaltenen Tenside können durch die weiteren Komponenten der Eisenphosphatierlösung ergänzt und dem Phosphatierbad wieder zugeführt werden. Nach diesem Verfahren kann man einen Teil der Wirkstoffe in die Eisenphosphatierlösung zurückführen und die Ab- und Frischwassermengen vermindern.

Die EP-A-414 301 betrifft ein abwasserfrei arbeitendes Verfahren zur Erzeugung von Phosphatüberzügen auf Metalloberflächen mittels wäßriger, Eisen(II)- und Nitrationen enthaltender Zinkphosphatlösungen. Dabei wird dem Phosphatierbad eine Spülbadkaskade aus mindestens 2 Spülbädem nachgeschaltet, salzarmes, vorzugsweise salzfreies Wasser in das letzte Spülbad gespeist, der Wasserüberlauf in das jeweils vorausgehende Spülbad bzw. das Phosphatierbad geleitet und dem Phosphatierbad mindestens so viel salzarmes bzw. salzfreies Wasser entzogen, daß es das mit Phosphat angereicherte Spülwasser aus der Kaskade aufnehmen kann. Hierbei läßt es sich jedoch nicht vermeiden, daß sich unerwünschte Inhaltsstoffe wie beispielsweise Abbauprodukte des Beschleunigers im Phosphatierbad anreichern.

Die Erfindung stellt sich die Aufgabe, ein Verfahren zur Aufbereitung von Phosphatierbadüberlauf und/oder von Spülwasser nach der Phosphatierung zur Verfügung zu stellen, das zumindest eine vereinfachte Abwasserbehandlung ermöglicht. Das Verfahren soll jedoch möglichst so betrieben werden können, daß eine zumindest teilweise Rückführung von Inhaltsstoffen in das Phosphatierbad möglich wird, ohne daß hierbei größere Mengen an Abbauprodukten des Beschleunigers in das Phosphatierbad zurückgeführt werden. Weiterhin soll es das Verfahren auf Wunsch ermöglichen, aufbereitetes Wasser für die Spülkaskade zur Verfügung zu stellen.

Diese Aufgabe wird gelöst durch ein Verfahren zur Aufbereitung von Phosphatierbadüberlauf und/oder von Spülwasser nach der Phosphatierung, wobei die Phosphatierung mit einer sauren wäßrigen Phosphatierlösung erfolgt, die 3 bis 50 g/l Phosphationen, berechnet als PO₄³⁻, 0,2 bis 3 g/l Zinkionen, gegebenenfalls weitere Metallionen sowie Beschleuniger enthält, dadurch gekennzeichnet, daß der Beschleuniger ein organischen Molekül oder Molekülion mit einer Molmasse von mindestens 80 g/mol darstellt und daß der Phosphatierbadüberlauf und/oder das Spülwasser einer Ultrafiltration unterworfen wird.

Die Zink-Gehalte liegen vorzugsweise im Bereich von 0,4 bis 2 g/l und insbesondere von 0,5 bis 1,5 g/l, wie sie für Niedrig-Zink-Verfahren üblich sind. Das Gewichtsverhältnis Phosphationen zu Zinkionen in den Phosphatierbädern kann in weiten Grenzen schwanken, sofern es im Bereich zwischen 3,7 und 30 liegt. Ein Gewichtsverhältnis zwischen 10 und 20 ist besonders bevorzugt

Dabei kann das Phosphatierbad außer den Zink- und Phosphationen weitere Komponenten enthalten, wie sie derzeit in Phosphatierbädem üblich sind.

Vorzugsweise werden Phosphatierlösungen eingesetzt, die weitere einoder zweiwertige Metallionen enthalten, die sich erfahrungsgemäß günstig auf die Lackhaftung und den Korrosionsschutz der hiermit erzeugten Phosphatschichten auswirken. Demgemäß enthält die erfindungsgemäße Phosphatierlösung vorzugsweise zusätzlich eines oder mehrere der folgenden Kationen:

| | |
|---|---|
| 0,1 | bis 4 g/l Mangan(II), |
| 0,2 | bis 2,5 g/l Magnesium(II), |
| 0,2 | bis 2,5 g/l Calcium(II), |
| 0,002 | bis 0,2 g/l Kupfer(II), |
| 0,1 | bis 2 g/l Cobalt(II). |

Erwünschtenfalls können die Phosphatierlösungen zusätzlich Nickelionen enthalten. Aus gesundheitlichen und ökologischen Gründen werden jedoch Phosphatierbäder bevorzugt, die möglichst geringe Gehalte an Nickelionen aufweisen oder erwünschtenfalls auch Nickel-frei sein können. Beispielsweise enthält die Phosphatieriösung außer Zinkionen als zusätzliche Kationen 0,1 bis 4 g/l Manganionen und 0,002 bis 0,2 g/l Kupferionen und nicht mehr als 0,05 g/l, insbesondere nicht mehr als 0,001 g/l Nickelionen. Wünscht man jedoch an der herkömmlichen Trikation-Technologie festzuhalten, können Phosphatierbäder eingesetzt werden, die außer Zinkionen 0,1 bis 4 g/l Manganionen und zusätzlich 0,1 bis 2,5 g/l Nickelionen enthalten. In welcher Form die Kationen in die Phosphatierbäder eingebracht werden ist prinzipiell ohne Belang. Es bietet sich insbesondere an, als Kationenquelle Oxide und/oder Carbonate zu verwenden. Wegen der Gefahr einer Aufsalzung der Phosphatierbäder sollten vorzugsweise Salze anderer Säuren als Phosphorsäure vermieden werden.

Bei Phosphatierbädem, die für unterschiedliche Substrate geeignet sein sollen, ist es üblich geworden, freies und/oder komplexgebundenes Fluorid in Mengen bis zu 2,5 g/l Gesamtfluorid, davon bis zu 750 mg/l freies Fluorid, jeweils berechnet als F⁻, zuzusetzen. Bei Abwesenheit von Fluorid soll der Aluminiumgehalt des Bades 3 mg/l nicht überschreiten. Bei Gegenwart von Fluorid werden infolge der Komplexbildung höhere Al-Gehalte toleriert, sofern die Konzentration des nicht komplexierten Al 3 mg/l nicht übersteigt.

Außer den schichtbildenden zweiwertigen Kationen enthalten Phosphatierbäder in der Regel zusätzlich Natrium-, Kalium- und/oder Ammoniumionen zur Einstellung der freien Säure.

Das Prinzip der vorliegenden Erfindung beruht darin, daß Beschleuniger eingesetzt werden, die die selbst und deren Abbauprodukte (= Reduktionsprodukte) im Vergleich zu den sonstigen Inhaltsstoffen des Phosphatierbads große Moleküle darstellen. Sie sind daher durch eine Membran geeigneter Trenngrenze von den Kationen und Anionen des Phosphatierbads abzutrennen. Die Trenngrenze der Membran liegt dabei in dem Bereich, der als Ultrafiltration bezeichnet wird. Überraschenderweise werden dabei Beschleunigermoleküle und deren Abbauprodukte gegenüber den Metallionen bevorzugt zurückgehalten, wenn deren Molmasse noch deutlich unter der nominellen Trenngrenze der Membran liegt. Ab einer Molmasse von mindestens 80 g/mol ist der Trenneffekt deutlich bemerkbar. Der Trenneffekt wird noch ausgeprägter, wenn die Molmasse bei ringförmigen Molekülen mindestens 100 g/mol und bei nichtringförmigen Molekülen bei mindestens 150 g/mol liegt. Beispielsweise können im Rahmen des erfindungsgemäßen Verfahrens als Beschleuniger Kohlenhydrate (Zucker) mit mindestens 5, vorzugsweise jedoch mindestens 6 Kohlenstoffatomen eingesetzt werden.

Vorzugsweise stellt der Beschleuniger ein stickstoffhaltiges homo- oder heterocyclisches organisches Molekül oder Molekülion dar.

Vorzugsweise wählt man den oder die Beschleuniger aus aus nitrosubstituierten Benzolsulfonsäuren oder deren Salzen sowie aus organischen N-Oxiden. Die Verwendung nitrosubstituierter Benzolsulfonsäuren oder deren Salze als Beschleuniger ist im Stand der Technik seit Jahrzehnten bekannt. In Frage kommen Benzolsulfonsäuren mit einer oder zwei Nitrogruppen. Der gebräuchlichste Beschleuniger aus dieser Gruppe ist m-Nitrobenzolsulfonsäure. Er ist für das erfindungsgemäße Verfahren dadurch besonders geeignet, daß seine "Abbauprodukte" (Moleküle, die bei der Reduktion des Beschleunigers mit Wasserstoff entstehen) teilweise infolge einer Kopplung zweier Ringsysteme eine höhere Molmasse aufweisen als der Beschleuniger selbst.

Andererseits können der oder die Beschleuniger ausgewählt sein aus organischen N-Oxiden. Selbstverständlich können diese zusammen mit den nitrosubstituierten Benzolsulfonsäuren eingesetzt werden. Als organische N-Oxide sind solche bevorzugt, die ein gesättigtes, ungesättigtes oder aromatisches fünf- oder sechsgliedriges Ringsystem aufweisen und bei denen das N-Atom des N-Oxids Bestandteil dieses Ringsystems ist. Beispiele derartiger Verbindungen sind die N-Oxide substituierter oder unsubstituierter Pyrrole, Imidazole, Oxazole, Pyridine, Pyrimidine, Pyrazine, Oxazine oder deren Hydrierungsprodukten, die gesättigte oder teilweise ungesättigte Ringe aufweisen. Besonders bevorzugt ist die Verwendung von N-Oxiden substituierter oder unsubstituierter Pyridine und Morpholine wie insbesondere Pyridin-N-Oxid, 2-Methylpyridin-N-Oxid, 4-Methylpyridin-N-Oxid, Morpholin-N-Oxid und N-Methylmorpholin-N-Oxid. Letzteres ist insbesondere bevorzugt. Dabei kann die Phosphatierlösung eines oder mehrere dieser N-Oxide enthalten. Die Gesamtkonzentration der N-Oxide in der Phosphatierlösung liegt vorzugsweise im Bereich von 0,1 bis 3 g/l und insbesondere im Bereich von 0,3 bis 2 g/l. Phosphatierbäder, die derartige N-Oxide als Beschleuniger enthalten, sind in der DE-A-197 33 978 offenbart.

Einer der angestrebten ökologischen Effekte der vorliegenden Erfindung besteht darin, bei der Verwendung stickstoffhaltiger Beschleuniger die Stickstoff-Fracht im Abwasser deutlich zu reduzieren. Da Nitrationen die Ultrafiltrationsmembran passieren, ist es daher bevorzugt, daß die Phosphatierlösung keine Nitrationen enthält. Vorzugsweise schließt man auch Chloridionen und Oxoanionen von Halogenen aus, da diese bei einer möglichen Rückführung des ggf. weiter aufkonzentrierten Permeats der Ultrafiltration in das Phosphatierbad sich in diesem anreichern und zu einer Aufsalzung führen würden. Außerdem soll die Konzentration von Sulfationen in dem Phosphatierbad eine bestimmte Obergrenze, beispielsweise etwa 30 g/l, nicht übersteigen. Wegen der Option der Permeatrückführung arbeitet man daher vorzugsweise mit Phosphatierbädern, die auch keine Sulfationen enthalten.

Für die Ultrafiltration stehen im Stand der Technik unterschiedliche Membrantypen zur Verfügung. Da Phosphatierbäder und auch die entsprechenden Spülwässer sauer reagieren, sollte die eingesetzte Ultrafiltrationsmembran säurestabil sein. Geeignet sind beispielsweise anorganische Membranen wie z. B. Keramikmembranen. Weiterhin können organische Polymermembranen eingesetzt werden. Insbesondere ist eine Polyamid-Membran geeignet.

In der einfachsten Ausführungsform führt man das erfindungsgemäße Verfahren derart durch, daß man das Permeat und das Retentat (= Konzentrat) der Ultrafiltration getrennt entsorgt. Beispielsweise kann das Konzentrat der Ultrafiltration durch Eindampfen weiter aufkonzentriert und danach entsorgt werden. Das beim Eindampfen entstehende Destillat kann als Spülwasser wieder verwendet werden. Das Permeat der Ultrafiltration, in dem die organischen Komponenten (Beschleuniger und deren Abbauprodukte) stark abgereichert sind, kann wieder in das Phosphatierbad zurückgeführt werden. Die im Überlauf des Phosphatierbads oder im Spülwasser vorhandenen schichtbildenden Kationen werden hierdurch nicht oder zumindest nicht vollständig verworfen, sondern der Phosphatierlösung wieder zugeführt. Die Gehalte der Phosphatierlösung an diesen Kationen müssen dann nur entsprechend dem Verbrauch durch die Phosphatschichtbildung oder durch die Schlammbildung im Phosphatierbad ergänzt werden. Dies führt einerseits zu verringerten Entsorgungskosten und führt andererseits zu einer wirtschaftlicheren Fahrweise des Phosphatierbads, da weniger Inhaltsstoffe neu zugeführt werden müssen.

Besonders vorteilhaft führt man das erfindungsgemäße Verfahren derart aus, daß man das Permeat der Ultrafiltration durch ein Membranverfahren mit geringerer Trenngrenze erneut auftrennt, beispielsweise durch Nanofiltration oder durch Umkehrosmose. Hierfür können Membranen geeigneter Trenngrenze eingesetzt werden. Für eine Nanofiltration können Keramikmembranen oder Polymer-Membranen eingesetzt werden. Polymer-Membranen eignen sich in geeigneter Ausführungsform auch für eine Umkehrosmose. Polyamid-Membranen sind hierbei besonders bevorzugt.

Bei der Nanofiltration oder der Umkehrosmose werden die lonen des Phosphatierbads im Retentat zurückgehalten, während das Permeat ein im wesentlichen salzfreies Wasser darstellt. Das Retentat der Nanofiltration oder der Umkehrosmose, das die ionischen Komponenten der Phosphatierlösung in angereicherter Form enthält, führt man vorzugsweise in die Phosphatierlösung zurück. Das Permeat der Nanofiltration oder der Umkehrosmose verwendet man vorzugsweise als Spülwasser nach der Phosphatierung.

Durch diese Kombination einer Ultrafiltration und einer Nanofiltration oder Umkehrosmose reduzieren sich die Abwässer der Phosphatierung auf das ggf. weiter aufkonzentrierte Retentat der Ultrafiltration. Das restliche Wasser wird im Phosphatierprozeß wieder verwendet. Die Abwassermengen reduzieren sich also beträchtlich, was einen ökologischen und ökonomischen Vorteil mit sich bringt. Außerdem wird wesentlich weniger Frischwasser im Phosphatierprozeß benötigt.

Schichtbildende Komponenten werden zumindest anteilig in die Phosphatierlösung zurückgeführt. Hierdurch werden weitere wirtschaftliche und ökologische Vorteile erzielt.

### Ausführungsbeispiel

Das erfindungsgemäße Verfahren der Ultrafiltration mit nachfolgender Nanofiltration des Permeats wurde an einem Spülwasser nach der Phosphatierung erprobt. Das Spülwasser wurde über eine aus Polyamid bestehende Desal G 5-Membran ultrafiltriert. Die Belastung der Probe mit chemischem Sauerstoffbedarf (CSB) durch den eingesetzten Beschleuniger m-Nitrobenzolsulfonsäure sowie dessen Reduktionsprodukte sowie die Gehalte des Spülwassers an Zink, Nickel, Mangan und Eisen sind in der Tabelle aufgeführt. Weiterhin enthält die Tabelle die entsprechenden Werte im Permeat und im Retentat der Ultrafiltration und der Nanofiltration. Das Permeat der Ultrafiltration wurde als Einsatzlösung für die Nanofiltration weiterverwendet. Beide Membranfiltrationsverfahren wurden derart betrieben, daß sich jeweils ein Volumenverhältnis von Retentat zu Konzentrat wie 1 : 1 einstellte. Durch Optimierung der Betriebsbedingungen wie beispielsweise Einsatz einer größeren Membranfläche kann das Volumenverhältnis Retentat zu Permeat weiter in Richtung des Permeats verschoben werden. Der summarische Trenneffekt ist dann ausgeprägter. Das Ausführungsbeispiel zeigt jedoch so schon deutlich, daß sich im Retentat der Ultrafiltration die organischen Komponenten deutlich stärker anreichern als die Metallionen. Dementsprechend sind im Permeat der Ultrafiltration die organischen Komponenten relativ zu den Metallionen deutlich abgereichert.

Durch die Nanofiltration des Permeats der Ultrafiltration wird einerseits ein mit organischen Komponenten und Metallionen wenig belastetes Permeat erhalten, das als Spülwasser wieder verwendet werden kann. Im Konzentrat der Nanofiltration sind, verglichen mit dem Spülwasser vor der Ultrafiltration, die organischen Komponenten relativ zu den schichtbildenden Kationen stark abgereichert.

**Tabelle:**

| Effekt der Ultrafiltration und anschließender Nanofiltration des Permeats auf ein Phosphatierspülwasser. Konzentrationen in mg/l. | | | | | |
|---|---|---|---|---|---|
| | Spülwasser | Ultrafiltration | | Nanofiltration | |
| | | Retentat | Permeat | Retentat | Permeat |
| CSB | 550 | 1030 | 91 | 145 | 35 |
| Zn | 115 | 152 | 79 | 154 | 4 |
| Ni | 57 | 66 | 38 | 74 | 2 |
| Mn | 59 | 74 | 43 | 84 | 2 |

| Betriebsbedingungen: | |
|---|---|
| Ultrafiltration | Nanofiltration |
| Desal G5-Membran | Desal DK-Membran |
| Druckdifferenz 5 bar | Druckdifferenz 7 bar |
| Temperatur 35 °C | Temperatur 35 °C |
| Membranfluß 15 l/m²h | Membranfluß 35-45 l/m²h |

## Patentansprüche

1. Verfahren zur Aufbereitung von Phosphatierbadüberiauf und/oder von Spülwasser nach der Phosphatierung, wobei die Phosphatierung mit einer sauren wäßrigen Phosphatieriösung erfolgt, die 3 bis 50 g/l Phosphationen, berechnet als PO₄³⁻, 0,2 bis 3 g/l Zinkionen, gegebenenfalls weitere Metallionen sowie Beschleuniger enthält, **dadurch gekennzeichnet, daß**
der Beschieuniger ein organischen Molekül oder Molekülion mit einer Molmasse von mindestens 80 g/mol darstellt und daß der Phosphatierbadüberlauf und/oder das Spülwasser einer Ultrafiltration unterworfen wird.

2. Verfahren nach Anspruch 1, **dadurch gekennzeichnet, daß** der Beschleuniger ein Kohlenhydrat mit mindestens 5 Kohlenstoffatomen darstellt.

3. Verfahren nach Anspruch 1, **dadurch gekennzeichnet, daß** der Beschleuniger ein stickstoffhaltiges homo- oder heterocyclisches organisches Molekül oder Molekülion darstellt.

4. Verfahren nach Anspruch und 3, **dadurch gekennzeichnet, daß** der Beschleuniger ausgewählt ist aus nitrosubstituierten Benzolsulfonsäuren oder deren Salzen und aus organischen N-Oxiden.

5. Verfahren nach einem oder mehreren der Ansprüche 1 bis 4, **dadurch gekennzeichnet, daß** die Phosphatierlösung frei ist von Nitrationen, Chloridionen und Oxoanionen von Halogenen.

6. Verfahren nach einem oder mehreren der Ansprüche 1 bis 5, **dadurch gekennzeichnet, daß** die Ultrafiltration über eine Polyamidmembran erfolgt.

7. Verfahren nach einem oder mehreren der Ansprüche 1 bis 6, **dadurch gekennzeichnet, daß** man das Permeat und das Retentat der Ultrafiltration getrennt entsorgt.

8. Verfahren nach einem oder mehreren der Ansprüche 1 bis 6, **dadurch gekennzeichnet, daß** man das Permeat der Ultrafiltration zumindest teilweise in die Phosphatierlösung zurückführt.

9. Verfahren nach einem oder mehreren der Ansprüche 1 bis 6, **dadurch gekennzeichnet, daß** man das Permeat der Ultrafiltration einer Umkehrosmose oder einer Nanofiltration unterwirft und das Retentat der Umkehrosmose oder der Nanofiltration in die Phosphatierlösung zurückführt.

10. Verfahren nach Anspruch 9, **dadurch gekennzeichnet, daß** man das Permeat der Umkehrosmose oder der Nanofiltration als Spülwasser wiederverwendet.

## Claims

1. A process for treating phosphatising bath overflow and/or wash water after phosphatising, phosphatising being performed using an acid, aqueous phosphatising solution which contains from 3 to 50 g/l of phosphate ions, calculated as PO₄³⁻, from 0.2 to 3 g/l of zinc ions, optionally further metal ions and accelerator, **characterised in that** the accelerator is an organic molecule or molecular ion having a molecular weight of at least 80 g/mol, and that the phosphatising bath overflow and/or the wash water is subjected to ultrafiltration.

2. A process as claimed in claim 1 wherein the accelerator is a carbohydrate having at least five carbon atoms.

3. A process as claimed in claim 1 wherein the accelerator is a nitrogen-containing homocyclic or heterocyclic organic molecule or molecular ion.

4. A process as claimed in claim 1 or claim 3 wherein the accelerator is selected from nitro-substituted benzene sulfonic acids or salts thereof and from organic N-oxides.

5. A process as claimed in one or more of claims 1 to 4 wherein the phosphatising solution contains no nitrate ions, chloride ions or oxyanions of halogens.

6. A process as claimed in one or more of claims 1 to 5 wherein ultrafiltration is performed through a polyamide membrane.

7. A process as claimed in one or more of claims 1 to 6 wherein the permeate and the retentate from ultrafiltration are disposed of separately.

8. A process as claimed in one or more of claims 1 to 6 wherein at least some of the permeate from ultratiltration is recycled to the phosphatising solution.

9. A process as claimed in one or more of claims 1 to 6 wherein the permeate from ultrafiltration is subjected to reverse osmosis or nanofiltration and the retentate from reverse osmosis or nanofiltration is recycled to the phosphatising solution.

10. A process as claimed in claim 9 wherein the permeate from reverse osmosis or from nanofiltration is recycled as wash water.

## Revendications

1. Procédé de traitement du trop-plein du bain de phosphatage et/ou de l'eau de lavage après la phosphatation, par lequel la phosphatation a lieu avec une solution aqueuse acide contenant de 3 à 50 g/l d'ions phosphate, calculée comme PO₄³⁻, de 0,2 à 3 g/l d'ions de zinc, éventuellement d'autres ions métalliques ainsi que des activateurs,
**caractérisé en ce que**
l'activateur est une molécule ou un ion moléculaire organique ayant une masse molaire d'au moins 80 g/mol, et le trop-plein du bain de phosphatage et/ou de Peau de lavage sont soumis à une ultrafiltration.

2. Procédé selon la revendication 1,
**caractérisé en ce que**
l'activateur est un hydrate de carbone avec au moins 5 atomes de carbone.

3. Procédé selon la revendication 1,
**caractérisé en ce que**
l'activateur est une molécule ou un ion moléculaire organique homo ou hétérocyclique azoté.

4. Procédé selon la revendication 3,
**caractérisé en ce que**
l'activateur est choisi parmi les acides benzosulfoniques nitrosubstitués ou leurs sels et les N-oxydes organiques.

5. Procédé selon l'une ou plusieurs des revendications 1 à 4,
**caractérisé en ce que**
la solution de phosphatage ne contient pas d'ions nitrate, d'ions chlorure et d'oxoanions d'halogènes.

6. Procédé selon l'une ou plusieurs des revendications 1 à 5,
**caractérisé en ce que**
l'ultrafiltration s'effectue par une membrane de polyamide.

7. Procédé selon l'une ou plusieurs des revendications 1 à 6,
**caractérisé en ce qu'**
on évacue séparément le perméat et le rétentat de l'ultrafiltration.

8. Procédé selon l'une ou plusieurs des revendications 1 à 6,
**caractérisé en ce qu'**
on recycle au moins en partie le perméat de l'ultrafiltration dans la solution de phosphatage.

9. Procédé selon l'une ou plusieurs des revendications 1 à 6,
**caractérisé en ce qu'**
on soumet le perméat de l'ultrafiltration à une osmose inverse ou une nanofiltration et on recycle le rétentat de l'osmose inverse ou de la nanofiltration dans la solution de phosphatage.

10. Procédé selon la revendication 9,
**caractérisé en ce qu'**
on réutilise le perméat de l'osmose inverse ou de la nanofiltration comme eau de lavage.
